# EUROPÄISCHE PATENTSCHRIFT

(11) **EP 2 571 709 B1**
(45) Veröffentlichungstag und Bekanntmachung des Hinweises auf die Patenterteilung: **12.03.2014**
(21) Anmeldenummer: 11723380.9
(22) Anmeldetag: 18.05.2011
(51) Int. Cl.: B60K 15/01, B60K 15/03, F02M 37/22

(54) **WASSERAUSTRAGSEINRICHTUNG**
WATER DISCHARGE DEVICE
DISPOSITIF D'EXTRACTION D'EAU

(30) Priorität: 20.05.2010 DE 102010022195
(43) Veröffentlichungstag der Anmeldung: 27.03.2013
(73) Patentinhaber: Mahle International GmbH, 70376 Stuttgart (DE)
(72) Erfinder: BRAUNHEIM, Michael, 73035 Göppingen (DE); FLAGGL, Kerstin, A-9400 Wolfsberg (AT); FONTANO, Markus, A-9400 Wolfsberg (AT); SCHADLER, Werner, A-8430 Seggauberg (AT)
(74) Vertreter: BRP Renaud & Partner
(86) Internationale Anmeldenummer: PCT/EP2011/058034
(87) Internationale Veröffentlichungsnummer: WO 2011/144654

(56) Entgegenhaltungen:
- WO-A1-2004/051070
- WO-A1-2004/061289

## Beschreibung

Die vorliegende Erfindung betrifft eine Wasseraustragseinrichtung, insbesondere in einem Kraftstofftank oder in einer Filtereinrichtung. Die Erfindung betrifft außerdem eine Filtereinrichtung mit einer derartigen Wasseraustragseinrichtung.

Kraftstoff für Brennkraftmaschinen wird üblicherweise zuerst gefiltert, bevor er der eigentlichen Verbrennung zugeführt wird. Das dabei im Kraftstoff enthaltene Wasser kann bspw. durch Oxidation von Metall die Brennkraftmaschine selbst oder Teile davon, wie bspw. eine Einspritzanlage, schädigen, weshalb üblicherweise Kraftstofffilter eingesetzt werden, die einen möglichst hohen Anteil des im Kraftstoff enthaltenen Wassers herausfiltern sollen. Dabei ist bei bekannten Kraftstofffiltern im unteren Bereich ein Wassersammelraum angeordnet, in welchem sich das Wasser aufgrund seiner höheren spezifischen Dichte im Vergleich zum Kraftstoff, sammelt. Zu vorgegebenen Zeiten oder aber bedingt durch das Erreichen vordefinierter Füllstände wird der Wassersammelraum entleert und das sich darin befindliche Wasser abgelassen. Nachteilig bei bekannten Kraftstofffiltern ist jedoch, dass es zu einer Kontamination der Umgebung mit Kraftstoff kommen kann, sofern eine Wasseraustragseinrichtung zum Ablassen des Wassers aus dem Wassersammelraum einen Wasserstand falsch erfasst.

Die WO 2004/051070 A1 offenbart eine Wasseraustragseinrichtung in einer Filtereinrichtung mit einem Wassersammelraum und zumindest einem Wassersensor, der in einem zumindest bodennahen Bereich des Wassersammelraums angeordnet ist. Das Dokument offenbart ferner einen Schwimmer zur Messung des aktuellen Wasserstands, der bei Überschreiten eines vorbestimmten Wasserpegels den Wassersensor aktiviert. Als Folge der Aktivierung werden wiederum Wasserablassmittel aktiviert, mittels derer das Wasser aus dem Wassersammelraum abgelassen wird.

Die WO 2004/061289 A1 offenbart eine gattungsemäße Wasseraustragseinrichtung in einer Filtereinrichtung mit einem Wassersammelraum und zumindest einem Wassersensor zur Ermittlung eines Wasserstandes im Wassersammelraum zur Steuerung eines Wasserablassventils, wobei der Wassersensor in einem zumindest bodennahen Bereich des Wassersammelraums oberhalb des Wasserablassventils angeordnet ist.

Die vorliegende Erfindung beschäftigt sich daher mit dem Problem, eine Wasseraustragseinrichtung zu schaffen, die insbesondere das Risiko einer Kontamination der Umgebung mit Gefahrstoffen, wie bspw. Kraftstoff, reduziert.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer Wasseraustragseinrichtung mit einem Wassersammelraum und zumindest einem Wassersensor zur Ermittlung eines Wasserstandes in diesem Wassersammelraum, in dem zumindest ein Wassersensor derart im Wassersammelraum anzuordnen, dass dieser unter normalen Betriebsbedingungen ausschließlich mit Wasser, d. h. insbesondere nie mit Kraftstoff oder Öl, in Kontakt gerät. Der zumindest eine Wassersensor ist dabei erfindungsgemäß in einem Bodenbereich des Wassersammelraums angeordnet, wobei zugleich eine Einrichtung vorgesehen ist, die einen Wasserspiegel im Bereich des zumindest einen Wassersensors künstlich hochhält und dadurch gewährleistet, dass der Wassersensor unter normalen Betriebszuständen, bspw. auch bei Kurvenfahrten oder Schräglagen von bis zu 45°, mit Wasser in Kontakt steht. Die erfindungsgemäße Einrichtung sorgt somit dafür, dass der Wassersensor in allen Betriebszuständen Kontakt mit Wasser hat und so insbesondere Fehlfunktionen, die ein versehentliches und unerwünschtes Ablassen von Öl- oder Kraftstoff vermeidet. Eine derartige Einrichtung kann bspw. als bodenseitige Senke ausgebildet sein, in welcher der zumindest eine Wassersensor angeordnet ist. In der bodenseitigen Senke wird dabei ein sog. Subvolumen bereitgestellt, das ausschließlich mit Wasser gefüllt ist, wodurch gewährleistet werden kann, dass der zumindest eine Wassersensor stets mit Wasser in Kontakt steht. An einem Boden der bodenseitigen Senke ist ein entsprechender Wasserablass angeordnet. Ein Ablassen des im Wassersammelraum gesammelten Wassers erfolgt dabei nach vordefinierten Zeitabständen und wird unmittelbar gestoppt, sofern der zumindest eine Wassersensor den Kontakt mit Wasser verliert. Durch das in der bodenseitigen Senke noch vorhandene Wasser wird aber stets ein Restvolumen im Wassersammelraum bzw. respektive in der Senke vorhandenem Wasser gewährleistet, sodass sicher ausgeschlossen werden kann, dass ungewollt Kraftstoff bzw. Öl abgelassen wird und dadurch die Umwelt kontaminiert. In diesem Zusammenhang wird öfters von Kraftstoff bzw. Öl gesprochen, sodass die erfindungsgemäße Wasseraustragseinrichtung bspw. in einem Kraftstofftank oder in einer Filtereinrichtung angeordnet sein kann. Denkbar ist aber selbstverständlich auch eine Anordnung in einer beliebigen anderen Vorrichtung, in welcher sich bodenseitig ein schwereres erstes Fluid sammelt, welches von einem darüber liegenden zweiten Fluid durch Ablassen getrennt werden soll. Die vorgeschlagene Einrichtung ist als den zumindest einen Wassersensor zumindest teilweise umgebende Wandkontur ausgebildet, wobei diese Wandkontur gewährleistet, dass der Wassersensor in allen denkbaren Betriebszuständen den Kontakt zum Wasser bzw. zum abzuscheidenden ersten Fluid hält. Bei Fahrt im Gelände dient die Wandkontur auch als Schwalischutz, um durch das Subvolumen das Eindringen von Kraftstoff/Diesel in eine Ablassleitung zu verhindern. Bei ruhendem Flüssigkeitspegel besteht die Gefahr nur bei Überschreiten der Schräglage von 45°. Bei Fahrt allerdings kann die Dynamik der gesamten Flüssigkeit bei fehlender Wandkontur zum Fluten der Ablassleitung mit Diesel führen.

Bei einer vorteilhaften Weiterbildung der erfindungsgemäßen Lösung, ist der Wassersensor zum Schalten einer Ventileinrichtung ausgebildet, über die im Bedarfsfall Wasser abgelassen werden kann. Die Ventileinrichtung ist dabei bspw. als elektrisches Ablassventil ausgebildet und wird entweder in gewissen Zeitabständen oder durch das Signal eines zweiten Wassersensors geöffnet. Ein Schließen der Ventileinrichtung erfolgt dabei unmittelbar, sofern der zumindest eine Wassersensor beginnt, den Kontakt mit dem im Wassersammelraum gesammelten Wasser zu verlieren. Ein Verlust dieses Kontaktes spricht für ein Absinken des Wasserspiegels im Wassersammelraum unter einen vordefinierten, insbesondere kritischen, Grenzwert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Wasseraustragseinrichtung in einer Schrägansicht,
- Fig. 2: eine Darstellung wie in Fig. 1, jedoch mit einem eingezeichneten fiktiven Wasserspiegel bei Schrägstellung der Wasseraustragseinrichtung.

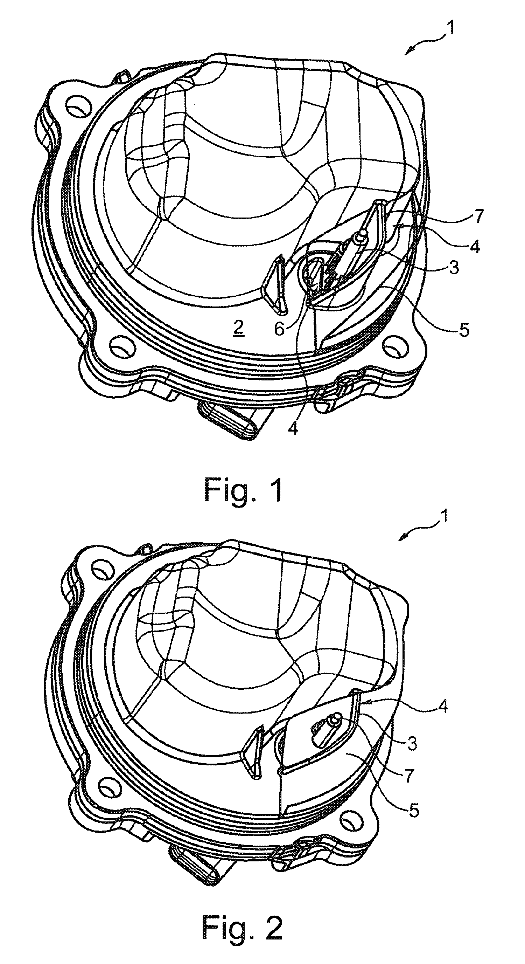

Entsprechend den Figuren 1 und 2, weist eine erfindungsgemäße Wasseraustragseinrichtung 1, die insbesondere in einem Kraftstofftank oder in einer Filtereinrichtung angeordnet sein kann, einen Wassersammelraum 2 sowie zumindest einen Wassersensor 3 zur Ermittlung eines Wasserstandes 5 im Wassersammelraum 2 sowie zur Steuerung eines Wasserablassventils auf. Der zumindest eine Wassersensor 3 ist dabei im Bodenbereich des Wassersammelraums 2, oberhalb des Wasserablassventils, bzw. eines Wasserablasses angeordnet, wobei zugleich eine Einrichtung 4 vorgesehen ist, die einen Wasserspiegel im Bereich des zumindest einen Wassersensors 3 künstlich hochhält und dadurch gewährleistet, dass der Wassersensor 3 unter allen denkbaren Betriebszuständen mit dem abzulassenden Wasser in Kontakt bleibt.

Die Einrichtung 4 kann dabei erfindungsgemäß als bodenseitige Senke 6 ausgebildet sein, in welcher der zumindest eine Wassersensor 3 angeordnet ist. Zusätzlich oder alternativ kann die erfindungsgemäße Einrichtung 4 auch als den zumindest einen Wassersensor 3 wenigstens teilweise umgebende Wandkontur 7 ausgebildet sein, wobei unabhängig von der Ausbildung der Einrichtung 4 gewährleistet wird, dass der Wasserstand 5 im Wassersammelraum 2 und insbesondere um den Wassersensor 3 herum nicht unter einen vordefinierten, unerwünschten Grenzwert fällt. Bei Fahrt im Gelände dient diese Wandkontur 7 als Schwallschutz, um durch das Subvolumen das Eindringen von Kraftstoff in eine Ablassleitung zu verhindern. Bei ruhendem Flüssigkeitspegel besteht die Gefahr nur bei Überschreiten der Schräglage von 45°. Bei Fahrt allerdings kann die Dynamik der gesamten Flüssigkeit bei fehlender Wandkontur 7 zum Fluten der Ablassleitung mit Kraftstoff führen, was zu einer ungewollten Kontamination der Umgebung führen kann.

Der zumindest eine Wassersensor 3 kann dabei zum Schalten des nicht näher gezeigten Wasserablassventils ausgebildet sein, über das im Bedarfsfall Wasser aus dem Wassersammelraum 2 abgelassen werden kann. Denkbar ist auch, dass ein weiterer, ebenfalls nicht gezeigter, Wassersensor vorgesehen ist, der oberhalb des zumindest einen Wassersensors 3 liegt und zum Öffnen des Wasserablassventils ausgebildet ist, sofern er Wasser detektiert. Der Ablassvorgang wird dann so lange fortgesetzt, bis der im Bodenbereich des Wassersammelraums 2 angeordnete Wassersensor 3 beginnt, den Kontakt mit dem Wasser zu verlieren. Durch das künstlich um den Wassersensor 3 herum hoch gehaltene Wasservolumen kann zuverlässig gewährleistet werden, dass beim Schließen des zumindest einen Wasserablassventils noch kein Fluid, insbesondere noch kein Kraftstoff oder Öl, mit abgelassen wurde und dadurch eine Kontamination der Umwelt zu befürchten wäre. Die Ablassleitung, in welcher das zumindest eine Wasserablassventil angeordnet ist, ist dabei unterhalb des zumindest einen Wassersensors 3 angeordnet.

Ein Öffnen der Ventileinrichtung kann bspw. elektrisch erfolgen, wogegen ein Schließen mechanisch, insbesondere mittels einer Feder, erfolgt, wodurch ein sog. Fail-Safe-Prinzip realisiert werden kann, das gewährleistet, dass insbesondere auch bei einem Stromausfall ein unbeabsichtigtes Ablassen und damit eine Kontamination der Umgebung zuverlässig vermieden werden kann. Die erfindungsgemäße Wasseraustragseinrichtung 1 sichert auch eine zuverlässige Erfassung des Wasserstandes 5 während einer Kurvenfahrt oder einer Schräglage eines Fahrzeugs, sofern die erfindungsgemäße Wasseraustragseinrichtung 1 bspw. in einem Kraftstofffilter oder einem Kraftstofftank des Fahrzeugs angeordnet ist.

Generell wird sowohl in den Ansprüchen als auch in der Beschreibung stets von einem Wassersammelraum 2 und einer Wasseraustragseinrichtung 1 gesprochen, wobei selbstverständlich klar ist, dass diese Einschränkung nur ein mögliches Einsatzgebiet darstellt, sodass die erfindungsgemäße Wasseraustragseinrichtung 1 generell auch beim Trennen eines ersten, schwereren Fluids von einem zweiten, vergleichsweise dazu leichteren Fluid Verwendung finden kann. Haupteinsatzgebiet der erfindungsgemäßen Wasseraustragseinrichtung 1 ist jedoch ein Kraftstofffilter bzw. ein Ölfilter oder ein Kraftstofftank in einem Kraftfahrzeug. Die erfindungsgemäße Einrichtung 4 kann dabei kostengünstig ausgebildet werden, egal ob als Senke 6 oder als Wandkontur 7, sodass die signifikanten Vorteile der Erfindung mit vergleichsweise geringen Kosten erzielbar sind. Insbesondere kann die Senke 6 bzw. die Wandkontur 7, d. h. die Einrichtung 4 zusammen mit dem Wassersammelraum 2, bspw. im Kunststoffspritzgussverfahren, hergestellt werden.

## Patentansprüche

1. Wasseraustragseinrichtung (1), insbesondere in einem Kraftstofftank oder einer Filtereinrichtung, mit
- einem Wassersammelraum (2),
- zumindest einem Wassersensor (3) zur Ermittlung eines Wasserstandes (5) im Wassersammelraum (2) und zur Steuerung eines Wasserablassventils
wobei
- der zumindest eine Wassersensor (3) in einem zumindest bodennahen Bereich des Wassersammelraums (2), oberhalb des Wasserablassventils angeordnet ist, eine Einrichtung (4) vorgesehen ist, die einen Wasserspiegel (5) im Bereich des zumindest einen Wassersensors (3) künstlich hochhält, wodurch gewährleistet werden kann, dass der Wassersensor (3) unter allen denkbaren Betriebszuständen mit Wasser in Kontakt steht,
**dadurch gekennzeichnet,**
**dass** die Einrichtung (4) als den zumindest einen Wassersensor (3) zumindest teilweise umgebende Wandkontur (7) gebildet ist.

2. Wasseraustragseinrichtung nach Anspruch 1,
**dadurch gekennzeichnet,**
**dass** die Einrichtung (4) als bodenseitige Senke (6) ausgebildet ist, in welcher der zumindest eine Wassersensor (3) angeordnet ist.

3. Wasseraustragseinrichtung nach Anspruch 1 oder 2,
**dadurch gekennzeichnet,**
**dass** der Wassersensor (3) zum Schalten einer Ventileinrichtung ausgebildet ist, über die im Bedarfsfall Wasser abgelassen werden kann.

4. Wasseraustragseinrichtung nach einem der Ansprüche 1 bis 3,
**dadurch gekennzeichnet,**
**dass** der Wassersensor (3) im Bereich eines Wasserablasses angeordnet ist, so dass durch ein durch die Einrichtung (4) gebildetes Subvolumen stets gewährleistet werden kann, dass kein Kraftstoff in den Wasserablass gelangt.

5. Wasseraustragseinrichtung nach einem der Ansprüche 1 bis 5,
**dadurch gekennzeichnet,**
**dass** ein Öffnen der Ventileinrichtung elektrisch und ein Schließen mechanisch, insbesondere mittels einer Feder, erfolgt.

6. Filtereinrichtung, insbesondere ein Öl- oder ein Kraftstofffilter, mit einer Wasseraustragseinrichtung (1) nach einem der Ansprüche 1 bis 5.

## Claims

1. A water discharge device (1), in particular in a fuel tank or filtration device, having
- a water collection chamber (2),
- at least one water sensor (3) for determining a water level (5) in the water collection chamber (2) and for controlling a water drainage valve
wherein
- the at least one water sensor (3) is arranged in a region of the water collection chamber (2) which is at least close to the bottom above the water drainage valve, a device (4) is provided, which keeps a water level (5) artificially high in the region of the at least one water sensor (3), as a result of which it can be ensured that the water sensor (3) is in contact with water under all conceivable operating conditions,
**characterised**
**in that** the device (4) is formed as a wall contour (7) which at least partially surrounds the at least one wall sensor (3).

2. The water discharge device according to Claim 1,
**characterised**
**in that** the device (4) is formed as a bottom sink (6) in which the at least one water sensor (3) is arranged.

3. The water discharge device according to Claim 1 or 2,
**characterised**
**in that** the water sensor (3) is configured to switch a valve device by means of which water can be drained if required.

4. The water discharge device according to any one of the Claims 1 to 3,
**characterised**
**in that** the water sensor (3) is arranged in the region of a water drain, so that it can always be ensured by means of a sub-volume formed by the device (4) that no fuel passes into the water drain.

5. The water discharge device according to any one of the Claims 1 or 4,
**characterised**
**in that** the valve device is opened electrically and closed mechanically, in particular by means of a spring.

6. A filtration device, in particular an oil or fuel filter, having a water discharge device (1) according to any one of the Claims 1 to 5.

## Revendications

1. Dispositif d'évacuation d'eau (1), notamment dans un réservoir de carburant ou un dispositif de filtrage, comportant :
- une chambre d'accumulation d'eau (2),
- au moins un capteur d'eau (3) pour déterminer un niveau d'eau (5) dans la chambre d'accumulation d'eau (2) et pour commander une soupape d'évacuation d'eau,
dans lequel
- au moins un capteur d'eau (3) est disposé dans une zone au moins proche du sol de la chambre d'accumulation d'eau (2), au-dessus de la soupape d'évacuation d'eau, un dispositif (4) est prévu, lequel maintient artificiellement élevé un niveau d'eau (5) au niveau d'au moins un capteur d'eau (3), moyennant quoi il peut être garanti que le capteur d'eau (3) soit en contact avec l'eau dans tous les états de fonctionnement envisageables,
**caractérisé en ce que**
le dispositif (4) est formé comme le contour de paroi (7) entourant au moins partiellement au moins un capteur d'eau (3).

2. Dispositif d'évacuation d'eau selon la revendication 1,
**caractérisé en ce que**
le dispositif (4) est réalisé comme un puits (6) du côté du sol, dans lequel au moins un capteur d'eau (3) est disposé.

3. Dispositif d'évacuation d'eau selon les revendications 1 ou 2,
**caractérisé en ce que**
le capteur d'eau (3) est réalisé afin de commuter un dispositif de soupape, par l'intermédiaire duquel en cas de besoin de l'eau peut être vidangée.

4. Dispositif d'évacuation d'eau selon une des revendications 1 à 3,
**caractérisé en ce que**
le capteur d'eau (3) est disposé au niveau d'une vidange d'eau, de telle sorte que le sous-volume formé par le dispositif (4) puisse être constamment garanti, de sorte qu'aucun carburant ne parvienne dans la vidange d'eau.

5. Dispositif d'évacuation d'eau selon une des revendications 1 à 4,
**caractérisé en ce que**
une ouverture et une fermeture du dispositif de soupape se fait mécaniquement, notamment au moyen d'un ressort.

6. Dispositif de filtrage, notamment filtre à huile ou filtre à carburant, comportant un dispositif d'évacuation d'eau (1) selon une des revendications 1 à 5.
